# EUROPÄISCHE PATENTSCHRIFT

(11) **EP 0 604 817 B1**
(45) Veröffentlichungstag und Bekanntmachung des Hinweises auf die Patenterteilung: **15.05.1996**
(21) Anmeldenummer: 93120098.4
(22) Anmeldetag: 14.12.1993
(51) Int. Cl.: C01G 49/10

(54) **Verfahren zur Reinigung einer technischen Eisenchloridlösung durch selektive Fällung**
Process for the purification of a technical iron chloride solution by selective precipitation
Procédé de purification d'une solution technique de chlorure de fer par précipitation sélective

(30) Priorität: 22.12.1992 DE 4243559
(43) Veröffentlichungstag der Anmeldung: 06.07.1994
(73) Patentinhaber: KRONOS TITAN-GmbH, D-51373 Leverkusen (DE)
(72) Erfinder: Hartmann, Achim, Dipl.-Ing., D-50259 Pulheim (DE); Schinkitz, Dieter, Dr., D-51381 Leverkusen (DE); Rothe, Ulrich, Dr., D-51067 Köln (DE)

(56) Entgegenhaltungen:
- EP-A- 0 390 293
- DE-A- 4 130 808
- US-A- 4 765 908
- DATABASE WPI Week 8013, Derwent Publications Ltd., London, GB; AN 80-23442C & SU-A-676 559 (BEREZ ALUMIN MAGN)
- PATENT ABSTRACTS OF JAPAN vol. 3, no. 114 (C-59) 21. September 1979 & JP-A-54 092 594 (DAIKIN KOGYO K.K.) 21. Juli 1979

## Beschreibung

Die Erfindung richtet sich auf ein Verfahren zum Entfernen abwasserbelastender Metallionen aus einer im wesentlichen Eisen(II)chlorid enthaltenden sauren Lösung von in verdünnter Salzsäure aufgelöstem Zyklonstaub aus der Titandioxidherstellung nach dem Chloridprozeß durch Anheben des pH-Wertes und Abtrennen der gebildeten Metallhydroxide.

Als Fällungs- und Flockungsmittel bei der Abwasserreinigung werden Eisen(II)chloridlösungen eingesetzt (Wassertechnische Information der KRONOS TITAN-GMBH, Ferrofloc^{(R)}). Eisen(II)chlorid fällt in großen Mengen bei der Titandioxidherstellung nach dem sogenannten Chloridverfahren an. Dabei wird ein Titan und Eisen enthaltender Rohstoff, z.B. Titanschlacke oder Ilmenit, in Gegenwart von Koks als Reduktionsmittel bei Temperaturen um 1000 °C in einem Fließbettreaktor chloriert. Neben dem Titantetrachlorid bildet sich dabei auch Eisen(II)chlorid. Aus dem den Reaktor verlassenden Gas wird das Eisen(II)chlorid zusammen mit den wasserunlöslichen Feststoffen - im wesentlichen Koks, nicht aufgeschlossenes Titandioxid und Siliciumdioxid - sowie anderen Metallchloriden in einem nachgeschalteten Zyklon abgeschieden. Das abgetrennte Gemisch wird als Zyklonstaub bezeichnet. Die aufwendige Aufarbeitung des Zyklonstaubes ist beispielsweise in der US 3 867 515 beschrieben.

Durch Anteigen des Zyklonstaubs in verdünnter Salzsäure und Abtrennen der wasserunlöslichen Bestandteile wird eine Lösung erhalten, die überwiegend Eisen(II)chlorid, daneben aber auch Aluminiumchlorid, Manganchlorid, Magnesiumchlorid, Zirconiumchlorid und Spurenelemente wie Chrom, Niob und Vanadium als Chloride enthält. Wenn eine solche Eisen(II)chloridlösung für die Abwasserbehandlung und Schlammkonditionierung eingesetzt werden soll, muß beachtet werden, daß wegen der aufgrund der Rohstoffzusammensetzung unvermeidlichen Anteile an Spurenelementen über die Chemikalie nicht Bestandteile in das Abwasser gelangen, die ihrerseits Entsorgungsprobleme aufwerfen. Die "belastete" Eisen(II)chloridlösung muß vor ihrem Einsatz also noch weiter gereinigt werden, d. h. insbesondere die Chrom-, Niob- und Vanadiumionen müssen aus der Lösung entfernt werden.

Es ist bekannt, daß, wenn der pH-Wert einer solchen Lösung über 1 angehoben wird, die gelösten Metallionen entsprechend ihren Löslichkeitsprodukten als Hydroxide ausfallen; Eisen(II)ionen bleiben bis zu einem pH-Wert von über 6 in Lösung. Somit könnte durch eine selektive Fällung theoretisch eine belastete ("technische") Eisenchloridlösung in eine saubere Eisen(II)chloridlösung überführt werden. In der Praxis ist dieser Weg jedoch nicht durchführbar. Gibt man zu einer sauren Lösung aus Zyklonstaub ein Neutralisationsmittel wie beispielsweise Natriumhydroxid, Calciumhydroxid, Magnesiumhydroxid, Natriumcarbonat oder Calciumcarbonat, dann bilden sich Metallhydroxidsole, die wegen ihrer gelartigen Struktur äußerst schwer filtrierbar und nicht deponiefähig sind.

In der russischen Patentschrift 676 559 ist das Ausfällen von Metallhydroxiden aus einer Lösung, die neben Eisen auch unerwünschte Schwermetallionen enthält, durch Zugabe von 8%iger Natriumhydrogencarbonatlösung bei 20 °C beschrieben; durch Anheben des pH-Wertes auf 4,5 soll insbesondere das Chrom im Filterkuchen angereichert werden. Unter den angegebenen Fällungsbedingungen sind die gelartigen Hydroxide unter vertretbarem Aufwand nicht filtrierbar. Über die Beschaffenheit des Filterkuchens werden in der Patentschrift keinerlei Angaben gemacht.

Eine andere Art der Entfernung von Chrom aus Metallchloridlösungen ist in der US 4 765 908 beschrieben. Dort werden Bentonite, insbesondere Montmorillonit, mindestens ein Flockungsmittel und Alkali- oder Erdalkalicarbonate zusammen mit Zirconiumkatalysatoren und wenigstens einem Polyelektrolyt eingesetzt, wodurch die Schwermetallionen adsorptiv gebunden werden und die Abtrennung des Filterkuchens keine Schwierigkeiten bereitet. Der Filterrückstand ist auch deponiefähig. Jedoch ist das Verfahren aufgrund des Chemikalieneinsatzes sehr aufwendig, und es fällt auch ein überdurchschnittlich großes Schlammvolumen an.

In der deutschen Patentanmeldung P 41 30 808.5 wird vorgeschlagen, die Entfernung der unerwünschten Ionen aus einer aus Zyklonstaub hergestellten Eisen(II)chloridlösung durch selektive Kristallisation vorzunehmen. Das dort beschriebene Verfahren führt zwar zu der gewünschten Reinigung der Eisen(II)chloridlösung, jedoch sind die Investitions- und Betriebskosten bei diesem Verfahren recht erheblich.

Der Erfindung liegt das Problem zugrunde, aus einer Eisen(II)chloridlösung unerwünschte Metallionen, insbesodere Chrom, Niob, Zirconium und Vanadium zu entfernen, wobei Mengen von größenordnungsmäßig 15 m³/h bewältigt werden müssen und beim Ausfällen der unerwünschten Metallionen als Hydroxide üblicherweise eine extrem feinteilige gelartige Suspension entsteht, die ausgefallenen Metallhydroxide bisher nicht durch Filtration hinreichend schnell und vollständig abzuscheiden sind und der Filterrückstand in der bisherigen Form nicht deponiefähig ist.

Es wurde nun gefunden, daß durch eine spezielle zweistufige Prozeßführung der Teilneutralisation Metallhydroxide von den zu entfernenden Ionen entstehen, die leichter als bisher in großtechnischem Maßstab abzuscheiden sind und so erstmals eine Reinigung großer Mengen belasteter Eisen(II)chloridlösungen durch selektive Fällung wirtschaftlich möglich wird. Das Verfahren ist dadurch gekennzeichnet, daß die Lösung zunächst mit einem ersten Neutralisationsmittel auf einen pH-Wert zwischen 0,3 und 0,8 eingestellt wird und dann die so abgestumpfte Lösung in eine Vorlage mit einem zweiten Neutralisationsmittel in Wasser oder gereinigter Eisen(II)chloridlösung so dosiert wird, daß der pH-Wert dort den Wert 2,0 nie unterschreitet und das zweite Neutralisationsmittel schwerlöslich und im Überschuß bezogen auf die zu fällenden abwasserbelastenden Metallionen vorhanden ist.

Die nach dem erfindungsgemäßen Verfahren erhaltenen Fällungsprodukte sind sehr gut filtrierbar; der Filterkuchen ist deponiefähig.

Als ganz besonders vorteilhaft hat sich als zweites Neutralisationsmittel Calciumcarbonat erwiesen. Es steht unbegrenzt zur Verfügung und es scheint gerade wegen seiner Schwerlöslichkeit in Wasser oder einer Eisenchloridlösung, d.h. durch eine Art natürliche Pufferwirkung der Suspension in der Vorlage, zu einer weniger spontanen Keimbildung und damit zu einer Vermeidung eines Gelzustandes zu kommen. Der mit diesem Neutralisationsmittel gebildete Feststoff ist wesentlich besser filtrierbar. Bei dieser Verfahrensweise scheint die Keimbildung herabgesetzt zu sein. Die Bildung von Eisen(II)hydroxid ist wegen des zu niedrigen pH-Wertes in der Vorlage nicht möglich. Eine Bildung von Eisen(III)hydroxid findet aufgrund der systemimmanenten Kohlendioxidentwicklung (Schutzgasatmosphäre) ebenfalls nicht statt; eine Oxidation mit dem Luftsauerstoff ist dadurch ausgeschlossen.

Während als zweites Neutralisationsmittel ganz besonders Calciumcarbonat bevozugt ist, das in einer Suspension die gewünschte Pufferwirkung zeigt, kommt als erstes Neutralisationsmittel für die Abstumpfung der technischen Eisenchloridlösungen neben Erdalkalicarbonat - wiederum bevorzugt Calciumcarbonat oder Dolomitsteinmehl - bevorzugt ein Abstumpfen durch Eisen bzw. Eisenverbindungen in Frage. Die Zugabe von Eisen vergrößert die Menge des gewünschten Endproduktes, ohne daß dadurch Nebenprodukte eingeschleppt werden. Bei Zugabe von Eisenschrott als erstem Neutralisationsmittel sind keine besonderen Maßnahmen zu beachten. Bei Einsatz von Sinter, einem Mischoxid aus zwei- und dreiwertigem Eisen, entstehen jedoch Eisen(III)ionen, die beim Einleiten der Lösung in das zweite Neutralisationsmittel teilweise als Eisen(III)hydroxid ausfallen würden und so mit dem Filterrückstand verloren gehen. Daher müssen bei Einsatz von Sinter als erstem Neutralisationsmittel, bevor die abgestumpfte Lösung in die Vorlage mit dem zweiten Neutralisationsmittel gegeben wird, Eisen(III)ionen mittels Schrott oder einem anderen Reduktionsmittel in Eisen(II)ionen umgewandelt werden.

Verwendet man Calciumcarbonat auch als erstes Neutralisationsmittel, enthält die Eisen(II)chloridlösung relativ hohe Calciumchloridmengen. Da das häufig unerwünscht ist, kann aus einer solchen Lösung durch Zugabe von Eisensulfat das Calciumsulfat ausgefällt und abgetrennt werden, wobei die Konzentration an Eisen(II)chlorid entsprechend ansteigt.

Bevorzugt soll die Temperatur der Suspension in der Vorlage 60 bis 90 °C; betragen. Unter diesen Bedingungen bilden sich Fällungsprodukte, die besonders günstig abgetrennt und auf Deponie gelegt werden können.

Es hat sich als günstig erwiesen, den zweiten Teilneutralisationsschritt zeitlich zu strecken. Die Zudosierung der mit dem ersten Neutralisationsmittel abgestumpften Lösung in die Vorlage sollte bevorzugt so erfolgen, daß pro Kilogramm Calciumcarbonat in der Vorlage 25 bis 33 l abgestumpfte Lösung pro Stunde zugegeben werden.

Die Erfindung ist im folgenden weiter beispielhaft beschrieben.

Eine typische "belastete" Eisen(II)chloridlösung aus Zyklonstaub in verdünnter Salzsäure hat folgende Zusammensetzung:

| | | | |
|---|---|---|---|
| Fe | 8,8 % | Ti | 410 ppm |
| Mn | 1,61 % | Cr | 1170 ppm |
| Mg | 0,67 % | V | 2410 ppm |
| Ca | 0,10 % | Nb | 580 ppm |
| HCl | 2,6 % | Zr | 1140 ppm |

Mit diesem technischen Eisen(II)chlorid wurden die 4 folgenden Versuche durchgeführt.

### Beispiel 1

Abstumpfung und Fällung nur mit Calciumcarbonat (Kalksteinmehl).
1200 ml der belasteten Eisen(II)chloridlösung werden auf 70 °C erwärmt. Innerhalb von 30 min werden 41,5 g Kalksteinmehl (ca. 97 % CaCO3, Korngröße kleiner 0,1 mm) eingerührt. Nach der Zugabe des ersten Neutralisationsmittels liegt der pH-Wert bei 0,78.

Von dieser mit dem ersten Neutralisationsmittel "abgestumpften" Lösung werden 30 ml pro Minute in eine vorgelegte Kalksteinmehl-Suspension (72 g Kalksteinmehl in 72 g Wasser) von 70 °C gegeben. Nach der Zugabe ist der pH-Wert in der Vorlage 2,8. Das Gemisch wird noch 30 min gerührt; der pH-Wert erhöht sich dabei auf 3,4. Die 70 °C heiße Suspension wird filtriert. In allen Beispielen wird die Filtration bei 50 mbar durchgeführt und eine Nutsche mit einem Durchmesser von 13 cm verwendet. Der Filtrationsverlauf ist in Tabelle 1 angegeben.

**Tabelle 1**

| | | | | | | | | |
|---|---|---|---|---|---|---|---|---|
| Filtratmenge in ml | 50 | 100 | 150 | 200 | 300 | 400 | 500 | 600 |
| Filtratzeit in s | 11 | 28 | 47 | 67 | 105 | 152 | 220 | 290 |

Der Filterkuchen ist 10 mm dick und stichfest. Das klare Filtrat hat folgende Zusammensetzung:

| | | | |
|---|---|---|---|
| Fe | 9,1 % | Ti | 9 ppm |
| Mn | 1,7 % | Cr | 8 ppm |
| Mg | 0,76 % | V | 3 ppm |
| Ca | 3,2 % | Nb | 7 ppm |
| Al | 25 ppm | Zr | 5 ppm |

Das Verhältnis Chrom zu Eisen hat sich von 0,0133 auf 0,000088, das Verhältnis Vanadium zu Eisen von 0,0274 auf 0,000033 verbessert. In relativ kurzen Zeiten (gute Filtrierbarkeit) wird also eine Abreicherung von etwa 97 % der belastenden Ionen erreicht, wobei aus den Fällungsprodukten ein stichfester Filterkuchen erhalten wird.

### Beispiel 2

Abstumpfung der belasteten Eisenchloridlösung mit Walzsinter und Reduktion des Fe³⁺.

1200 g der anfangs genannten belasteten (technischen) Eisen(II)chloridlösung werden mit 25,5 g Walzsinter (FeO = 68 %; Fe₂O₃ = 32 %) 1 Stunde bei 80 °C gerührt. Zur Reduktion der Fe(III)ionen wird Eisenpulver zugegeben und das Gemisch weitere 20 min bei 80 °C gerührt. Der pH-Wert liegt bei 0,75. Diese abgestumpfte Lösung wird mit einer Dosiergeschwindigkeit von 30 ml/min in eine Vorlage gegeben.

Sie enthält wieder 72 g Kalksteinmehl in 72 g Wasser und hat eine Temperatur von 70 °C. Am Ende der Dosierung, nach 30 min, wird der pH-Wert 2,8 erreicht. Nach 30 minütigem weiterem Rühren steigt der pH-Wert noch auf 3,3 an. Die Filtration bei 70 °C erfolgt auf der Nutsche unter gleichen Bedingungen wie in Beispiel 1. Der Filtrationsverlauf ist in Tabelle 2 angegeben.

**Tabelle 2**

| | | | | | | | | |
|---|---|---|---|---|---|---|---|---|
| Filtratmenge in ml | 50 | 100 | 150 | 200 | 300 | 400 | 500 | 600 |
| Filtrationszeit in s | 14 | 31 | 57 | 87 | 165 | 276 | 415 | 540 |

Zusammensetzung der Lösung beträgt:

| | | | |
|---|---|---|---|
| Fe | 10,30 % | Ti | 5 ppm |
| Mn | 1,51 % | Cr | 6 ppm |
| Mg | 0,74 % | V | 4 ppm |
| Ca | 1,40 % | Nb | 4 ppm |
| Al | 26 ppm | Zr | 2 ppm |

Das Chrom-Eisen-Verhältnis hat sich von 0,0133 auf 0,000058, das Vanadium-Eisen-Verhältnis von 0,0274 auf 0,000039 verbessert.

### Beispiel 3

Einfluß der Dosiergeschwindigkeit.
Es wird wie in Beispiel 2 gearbeitet, jedoch wird die Dosiergeschwindigkeit der belasteten Lösung in die vorgelegte Calciumcarbonat-Suspension auf 50 ml/min angehoben. Der pH-Wert am Ende der Zugabe liegt bei 2,2 und nach 30 min Rührzeit bei 3,2. Wie in Tabelle 3 zu erkennen ist, hat sich die Filtrierbarkeit nicht verschlechtert, jedoch die Abreicherung von Chrom auf 0,00018 und von Vanadium auf 0,0027 abgenommen.

**Tabelle 3**

| | | | | | | | | |
|---|---|---|---|---|---|---|---|---|
| Filtrationsmenge in ml | 50 | 100 | 150 | 200 | 300 | 400 | 500 | 600 |
| Filtrationszeit in s | 12 | 27 | 52 | 83 | 160 | 268 | 401 | 521 |

Das Filtrat hat folgende Zusammensetzung

| | | | |
|---|---|---|---|
| Fe | 10,28 % | Ti | 13 ppm |
| Mn | 1,5 % | Cr | 19 ppm |
| Mg | 0,74 % | V | 277 ppm |
| Ca | 1,37 % | Nb | 46 ppm |
| Al | 32 ppm | Zr | 9 ppm |

### Beispiel 4

Herkömmliche Neutralisation als Vergleichsbeispiel.
1200 g der sauren belasteten FeCl₂-Lösung wurden auf 80 °C erwärmt und wie in Beispiel 2 mit Walzsinter abgestumpft und 3-wertige Eisenionen mit Eisen reduziert. Diese Lösung (pH = 0,78; 70 °C) wird jetzt durch Zugabe von 72 g festem Kalksteinmehl in 30 min (teil-)neutralisiert.
Am Ende der Zugabe ist der pH-Wert auf 2,7 angestiegen und nach 30 min weiterer Rührzeit wird ein Wert von 3,0 erreicht. Es wird die 70 °C warme Suspension wie oben beschrieben filtriert. Tabelle 4 zeigt die ganz wesentlich verschlechterte Filtrierbarkeit.

**Tabelle 4**

| | | | | | | | |
|---|---|---|---|---|---|---|---|
| Filtratmenge in ml | 20 | 40 | 60 | 80 | 100 | 250 | 200 |
| Filtrationszeit in s | 8 | 22 | 62 | 180 | 240 | 650 | 1520 |

Die Filtration kommt also relativ bald zum Erliegen. Der ca. 3 mm dicke Filterkuchen besteht aus einer gelartigen, halbflüssigen Masse. Das Filtrat hat folgende Zusammensetzung:

| | | | |
|---|---|---|---|
| Fe | 10,41 % | Ti | 15 ppm |
| Mn | 1,51 % | Cr | 39 ppm |
| Mg | 0,77 % | V | 64 ppm |
| Ca | 1,38 % | Nb | 51 ppm |
| Al | 195 ppm | Zr | 12 ppm |

Entsprechend klein ist auch nur die Abreicherung (auf 0,00037 bei Cr/Fe und 0,00061 bei V/Fe).

## Patentansprüche

1. Verfahren zum Entfernen abwasserbelastender Metallionen aus einer im wesentlichen Eisen(II)chlorid enthaltenden sauren Lösung von in verdünnter Salzsäure aufgelöstem Zyklonstaub aus der Titandioxidherstellung nach dem Chloridprozeß durch Anheben des pH-Wertes und Abtrennen der gebildeten Metallhydroxide, dadurch gekennzeichnet, daß die Lösung zunächst mit einem ersten Neutralisationsmittel auf einen pH-Wert zwischen 0,3 und 0,8 eingestellt wird und dann die so abgestumpfte Lösung in eine Vorlage mit einem zweiten Neutralisationsmittel in Wasser oder gereinigter Eisenchloridlösung so dosiert wird, daß der pH-Wert dort den Wert 2,0 nie unterschreitet und das zweite Neutralisationsmittel schwerlöslich und im Überschuß bezogen auf die zu fällenden abwasserbelastenden Metallionen vorhanden ist.

2. Verfahren nach Anspruch 1, dadurch gekennzeichnet, daß das zweite Neutralisationsmittel ein Erdalkalicarbonat, bevorzugt Calciumcarbonat oder Dolomitstein, ist.

3. Verfahren nach Anspruch 1 oder 2, dadurch gekennzeichnet, daß die Menge des zweiten Neutralisationsmittels das 1,05- bis 1,4-fache der stöchiometrisch zu fällenden abwasserbelastenden Metallionen beträgt.

4. Verfahren nach einem der Ansprüche 1 bis 3, dadurch gekennzeichnet, daß das erste Neutralisationsmittel ein Erdalkalicarbonat oder Eisenschrott ist.

5. Verfahren nach Anspruch 1 bis 3, dadurch gekennzeichnet, daß das erste Neutralisationsmittel Eisensinter ist und durch Zugabe von einem Reduktionsmittel, bevorzugt Eisen, vor dem Einleiten der Lösung in die Vorlage die Eisen(III)ionen reduziert werden.

6. Verfahren nach einem der Ansprüche 1 bis 5, dadurch gekennzeichnet, daß die Temperatur der Suspension in der Vorlage 60 bis 90 °C beträgt.

7. Verfahren nach einem der Ansprüche 1 bis 6, dadurch gekennzeichnet, daß die Dosiergeschwindigkeit der abgestumpften Lösung in eine vorgelegte Calciumcarbonat-Suspension 25 l/h bis 33 l/h, bezogen auf 1 kg Calciumcarbonat in der Vorlage, beträgt.

## Claims

1. Process for the removal of metal ions which contaminate waste water from an acidic solution containing substantially iron(II) chloride and consisting of cyclone dust from the production of titanium dioxide by the chloride process dissolved in dilute hydrochloric acid, by raising the pH value and separating the metal hydroxides formed, characterised in that the solution is first of all adjusted to a pH value of between 0.3 and 0.8 using a first neutralising agent and the solution thus neutralised is then measured into a receiver containing a second neutralising agent in water or purified iron chloride solution at a rate such that the pH value there never falls below the value of 2.0, and the second neutralising agent is sparingly soluble and is present in excess with reference to the metal ions contaminating waste water which are to be precipitated.

2. Process according to claim 1, characterised in that the second neutralising agent is an alkaline earth carbonate, preferably calcium carbonate or dolomite brick.

3. Process according to claim 1 or 2, characterised in that the quantity of the second neutralising agent is 1.05 to 1.4 times the stoichiometric quantity to be precipitated of the metal ions contaminating waste water.

4. Process according to any one of claims 1 to 3, characterised in that the first neutralising agent is an alkaline earth carbonate or is scrap iron.

5. Process according to any one of claims 1 to 3, characterised in that the first neutralising agent is sintered iron and the iron(III) ions are reduced by the addition of a reducing agent, preferably iron, prior to the introduction of the solution into the receiver.

6. Process according to any one of claims 1 to 5, characterised in that the temperature of the suspension in the receiver is from 60 to 90°C.

7. Process according to any one of claims 1 to 6, characterised in that the rate of measuring the neutralised solution into a calcium carbonate suspension previously placed in the receiver is from 25 l/h to 33 l/h, referred to 1 kg of calcium carbonate in the receiver.

## Revendications

1. Procédé d'élimination des ions métalliques polluant les eaux résiduaires se trouvant dans une solution acide, contenant essentiellement du chlorure de fer(II), de poussières de cyclones dépoussiéreurs dissoutes dans de l'acide chlorhydrique dilué provenant de la préparation du dioxyde de titane par le procédé au chlorure, par élévation du pH et séparation des hydroxydes métalliques formés, caractérisé en ce que la solution est d'abord, avec un premier agent de neutralisation, ajustée à un pH compris entre 0,3 et 0,8, puis on place la solution ainsi neutralisée dans un récipient contenant un deuxième agent de neutralisation dans l'eau ou dans une solution purifiée de chlorure de fer, de façon que le pH n'y passe jamais en-dessous de 2,0, et que le deuxième agent de neutralisation est difficilement soluble et est présent en un excès par rapport aux ions métalliques polluant les eaux résiduaires qu'il s'agit de précipiter.

2. Procédé selon la revendication 1, caractérisé en ce que le deuxième agent de neutralisation est un carbonate d'un métal alcalino-terreux, de préférence le carbonate de calcium, ou la dolomite.

3. Procédé selon la revendication 1 ou 2, caractérisé en ce que la quantité du deuxième agent de neutralisation est de 1,05 à 1,4 fois la quantité stoechiométrique des ions métalliques polluant les eaux résiduaires et qu'il s'agit de précipiter.

4. Procédé selon l'une des revendications 1 à 3, caractérisé en ce que le premier agent de neutralisation est un carbonate de métal alcalino-terreux ou de la ferraille.

5. Procédé selon la revendication 1 à 3, caractérisé en ce que le premier agent de neutralisation est un sinter de fer, et que, par addition d'un réducteur, de préférence le fer, on réduit les ions fer(III) avant introduction de la solution dans le récipient.

6. Procédé selon l'une des revendications 1 à 5, caractérisé en ce que la température de la suspension dans le récipient est de 60 à 90°C.

7. Procédé selon l'une des revendications 1 à 6, caractérisé en ce que la vitesse de dosage de la solution neutralisée dans une suspension de carbonate de calcium déjà en place dans le récipient est de 25 à 33 l/h, par kg de carbonate de calcium se trouvant dans le récipient.
